# EUROPÄISCHE PATENTANMELDUNG

(11) **EP 4 721 540 A1**
(43) Veröffentlichungstag der Anmeldung: **08.04.2026**
(21) Anmeldenummer: 25204487.0
(22) Anmeldetag: 25.09.2025
(51) Int. Cl.: A01B 23/02

(54) **BODENBEARBEITUNGSWERKZEUG**

(30) Priorität: 26.09.2024 DE 102024127989
(71) Anmelder: Lemken GmbH & Co KG, 46519 Alpen (DE)
(72) Erfinder: Bögel, Tim, 47055 Duisburg (DE)

(57) **Zusammenfassung**

Es wird ein Bodenbearbeitungswerkzeug mit einer verbesserten Haltbarkeit einer stoffschlüssigen Fügeverbindung zwischen Scharkörper / Tragkörper und Hartmetallplatten / Werkzeugkörper vorgeschlagen. Dies wird erreicht, indem der Werkzeugkörper ein oder mehrere Drainageprofile zum Entweichen von den Fügevorgang störender Luft-, Gas- oder Flüssigkeitseinschlüsse aufweist.

## Beschreibung

Die Erfindung betrifft ein Bodenbearbeitungswerkzeug, gemäß dem Oberbegriff des Patentanspruches 1, weiterhin ein Herstellverfahren für ein entsprechendes Bodenbearbeitungswerkzeug.

Bodenbearbeitungswerkzeuge werden in landwirtschaftlichen Geräten zum Schneiden, Lockern, Zerkleinern oder Mischen von Bodenmaterial oder auf einer Bodenoberfläche befindlichen Aufwuchs wie Unkraut oder Pflanzenreste verwendet. Naturgemäß unterliegen die Bodenbearbeitungswerkzeuge bei ihrer Bewegung durch die Bodenoberfläche einem abrasiven Verschleiß. Insbesondere verschleißexponierte Geometrien der Bodenbearbeitungswerkzeuge wie Spitzen und Schneiden werden hierzu mit Carbiden aufgepanzert oder mit Hartmetall-, Keramik- oder Sinterplatten ausgestattet, um dem Abrasiv-Verschleiß zu begegnen und die Einsatzdauer zu erhöhen.

Die Anmeldung EP923851A1 zeigt ein Lockerungsschar für ein Bodenbearbeitungsgerät mit einem Hartmetallbesatz an den verschleißexponierten Stellen. Weiterhin zeigt die Anmeldung DE102011102053A1 ein Schar oder eine Scharspitze mit einem hartmetallbestücktem Scharkörper und einem austauschbaren, weiteren Leitelement als Verschleißfläche.

Das Patent DE102004034093B4 schützt ein Verfahren zur Aufbringung von Hartmetallplatten auf einem Scharkörper und kombiniert zugleich eine Vergütung des Scharkörpers.

Es hat sich herausgestellt, dass die Haltbarkeit der Verbindung zwischen Scharkörper und Hartmetallplatten durch unzureichenden Kontakt eines Fügemittels zwischen Scharkörper und Hartmetallplatten sich verringert und bei punktuellen Belastungen der Hartmetallplatten und Spitzen, wie sie bei unerwartetem Fremdkörperkontakt im Boden auftreten, vorzeitig bricht oder abschält. Dies führt zu Verlust der Hartmetallplatten und entsprechend zu erheblichen, vorzeitigem Verschleiß des Scharkörpers an der Schadstelle durch abrasive Auswaschungen.

Aufgabe der Erfindung ist es, obige Nachteile durch Verbesserung des Kontaktes des Fügemittels zu vermeiden und die Haltbarkeit der Verbindung zwischen Hartmetallplatten und Scharkörper zu verbessern.

Diese Aufgabe wird durch die Merkmale des kennzeichnenden Teiles des Anspruches 1 sowie dem Herstellverfahren gelöst. Weitere Vorteile werden in den nachfolgenden Ansprüchen behandelt.

Ein Bodenbearbeitungswerkzeug besteht zumindest aus einem Tragkörper, beispielsweise einem Scharkörper, und zumindest einem Werkzeugkörper, beispielsweise einer Hartmetallplatte. Der Tragkörper und der Werkzeugkörper sind durch einen Fügevorgang stoffschlüssig miteinander verbunden. Der Werkzeugkörper weist ein oder mehrere Drainageprofile zum Entweichen von den Fügevorgang störende Luft-, Gas- oder Flüssigkeitseinschlüsse auf. Dies ermöglicht ein kontrolliertes Entweichen von Luft-, Gas- oder Flüssigkeiten über das eine oder mehrere Drainageprofile, welche ansonsten zwischen Tragkörper und Werkzeugkörper während des Fügevorganges eingeschlossen werden können. Als Konsequenz bewirken die Luft-, Gas- oder Flüssigkeitseinschlüsse ansonsten einen nur partiellen Kontakt der stoffschlüssigen Verbindung zwischen Tragkörper und Werkzeugkörper. Dies hätte im Vergleich zu einer vollständigen, durchgehenden Stoffschlussverbindung eine schlechtere Haltbarkeit der Stoffschlussverbindung und einen vorzeitigen Bruch oder Verlust des Werkzeugkörpers zur Folge. Der stoffschlüssige Fügevorgang erfolgt beispielsweise unter Zugabe eines Fügemittels wie Lot oder Klebstoff und eventueller Zugabe von Fluss- oder Aktivierungsmitteln. Auch eine thermische Unterstützung oder Einwirkung des Fügevorganges hätte ansonsten eine nachteilige Bildung von Gas- oder Dampfblasen innerhalb der Stoffschlussverbindung zur Folge. Die Drainageprofile ermöglichen vorteilhaft die Abfuhr und Eliminierung der störende Luft-, Gas- oder Flüssigkeitseinschlüsse und verbessern die Haltbarkeit der Stoffschlussverbindung zwischen Tragkörper und Werkzeugkörper.

In einer verbesserten Ausführungsform des Bodenbearbeitungswerkzeuges weist der Werkzeugkörper zumindest eine Hauptfügefläche zur stoffschlüssigen Verbindung zwischen Tragkörper und Werkzeugkörper auf. Die Hauptfügefläche ist entweder die einzige oder eine mit der größten Flächenausdehnung, welche zumindest einen großen Teil des Kontaktbereiches zwischen dem Tragkörper und Werkzeugkörper bildet und zur Herstellung der Stoffschlussverbindung dient. Dabei ist zumindest ein Drainageprofil als von der Hauptfügefläche sich durch den Werkzeugkörper erstreckende Ausnehmung oder Durchbruch ausgebildet. Die zumindest eine Ausnehmung oder der Durchbruch erstreckt sich durchgehend von der Hauptfügefläche durch den Werkzeugkörper bis zur der Hauptfügefläche gegenüberliegenden Seite des Werkzeugkörpers. Die Querschnittsausdehnung der Ausnehmung oder des Durchbruches, beispielsweise einer Bohrung, beträgt bevorzugt nur einen Bruchteil der Dicke des Werkzeugkörpers. Als Dicke des Werkzeugkörpers versteht sich der Abstand zwischen der Hauptfügefläche und der dieser gegenüberliegenden Leitfläche des Werkzeugkörpers im Bereich der Ausnehmung. Der Bruchteil beträgt bevorzugt nicht mehr als die Hälfte der Dicke des Werkzeugkörpers, idealerweise nicht mehr als ein Drittel der Dicke des Werkzeugkörpers. Im Falle einer einzigen Ausnehmung oder eines Durchbruches des Werkzeugkörpers ist dieser/diese bevorzugt auf dem Flächenschwerpunkt der Hauptfügefläche oder geringfügig daneben angeordnet. Dies ermöglicht ein Entweichen von Luft-, Gas- oder Flüssigkeitseinschlüssen auf kürzestem und somit schnellstem Wege. Ist die Hauptfügefläche eine Regelfläche wie beispielsweise ein Drei- oder Viereck, ist der Flächenschwerpunkt zugleich der Flächenmittelpunkt der Hauptfügefläche.

In einer verbesserten Ausbildung des Bodenbearbeitungswerkzeuges weist der Werkzeugkörper zumindest eine Hauptfügefläche zur stoffschlüssigen Verbindung zwischen Tragkörper und der Werkzeugkörper auf. Dabei ist zumindest ein Drainageprofil als sich entlang der Hauptfügefläche erstreckende Ausnehmung oder Nut ausgebildet. Bevorzugt erstreckt sich das Drainageprofil von einer ersten Berandung oder Ecke der Hauptfügefläche zu einer jeweils der ersten gegenüberliegenden Berandung oder Ecke der Hauptfügefläche. Auch hier beträgt die Querschnittsausdehnung der Ausnehmung oder der Nut bevorzugt nur einen Bruchteil der Dicke des Werkzeugkörpers, weiter bevorzugt nicht mehr als die Hälfte der Dicke des Werkzeugkörpers, idealerweise ebenfalls nicht mehr als ein Drittel der Dicke des Werkzeugkörpers.

Die Hauptfügefläche kann als plane Fügefläche ausgebildet sein. Dies vereinfacht die Herstellung der zugehörigen Kontaktfläche des Tragkörpers. Ebenso kann die Hauptfügefläche gebogen ausgebildet werden. Hierdurch entsteht eine mehrachsige Spannungsübertragung von Scher,- Biege- oder Zugspannungen zwischen Werkzeugkörper über das Fügemittel auf den Tragkörper. Die Spannungen entstehen durch die Einwirkung von Schneid- und Brechkräften auf den Werkzeugkörper, wie sie während der Bodenbearbeitung und Bewegung des Bodenbearbeitungswerkzeuges durch den Boden, insbesondere bei Fremdkörperkontakt wie großen Steinen, auftreten. Anstelle einer gebogenen Hauptfügefläche kann diese auch eine, insbesondere dachförmige Abwinkelung oder eine oder mehrere Abstufungen aufweisen. Dies ermöglicht eine mehrschnittige Stoffschlussverbindung und somit ebenfalls eine verbesserte Spannungsübertragung zwischen Werkzeugkörper und Tragkörper.

Vorteilhaft weisen ein oder mehrere Werkzeugkörper wesentlich höhere Verschleißfestigkeiten, Zugfestigkeiten oder Oberflächenhärten als der Tragkörper auf. Demgegenüber weist der Tragkörper wesentlich höhere Wandstärken, Dicken oder generell ein höheres Materialvolumen, welches dem Abrasivverschleiß durch Bodenmaterialkontakt unterliegt, auf als die Werkzeugkörper. Hierdurch kann der Tragkörper aufgrund seiner Formgebung wesentlich größere Schneid- und Brechkräfte beim Vorschub durch die Bodenoberfläche aufnehmen und diese in einen Halter oder Zinken einleiten, welcher am Rahmen eines Bodenbearbeitungsgerätes befestigt ist. Da der Werkzeugkörper bevorzugt im Schneidenbereich des Bodenbearbeitungswerkzeuges angeordnet ist, kann dieser, anders als der Tragkörper, lediglich mit einer geringen Wandstärke oder Materialdicke ausgebildet werden. Durch die wesentlich höheren Verschleißfestigkeiten, Zugfestigkeiten oder Oberflächenhärten kann die geringe Wandstärke oder Materialdicke jedoch kompensiert werden. Insgesamt bietet die Kombination von Werkzeugkörper und Tragkörper eine höhere Verschleißfestigkeit und somit Standzeit bis zu einem erforderlichen Austausch. Dabei ist der Werkzeugkörper bevorzugt als Hartmetall- oder Sintermetallkörper ausgebildet.

In einer besonderen Erfindungsform des Bodenbearbeitungswerkzeuges sind der Werkzeugkörper und der Tragkörper zumindest im Bereich der Hauptfügefläche um ein Spaltmaß voneinander beabstandet angeordnet. Der so definierte Fügespalt ermöglicht die Einbringung eines Fügemittels wie beispielsweise Klebstoff oder Lot in einer geringen, aber gleichmäßigen Schichtdicke, welches die Festigkeit der Stoffschlussverbindung erheblich verbessert. Im Falle einer Lötverbindung ermöglicht der um das Spaltmaß definierte Fügespalt eine Kappilarwirkung auf das zugegeben Lot, welches beim Erhitzen der Lötstelle zu einer Flüssigkeit schmilzt und sich durch den Fügespalt und der vorliegenden Kappilarspannung des flüssigen Lotes selbstständig in den Fügespalt verteilt.

In einer weiteren Form der Erfindung weist der Werkzeugkörper oder der Tragkörper zumindest im Bereich der Hauptfügefläche partielle, bevorzugt punkt- oder noppenförmige Erhebungen oder Vorsprünge auf. Durch diese Erhebungen, welche in der Höhe bevorzugt nur einen Bruchteil eines Millimeters betragen, kann ein definierter Fügespalt eingehalten werden, welcher den Fügevorgang unter Zuhilfenahme eines Fügestoffes reproduzierbar absichert.

In einer weiteren Erfindungsform des Bodenbearbeitungswerkzeuges weist der Tragkörper Formschlusselemente oder Kavitäten zur Aufnahme eines einzelnen oder mehrerer Werkzeugkörper auf. Hierdurch können die Positionierungen des oder der Werkzeugkörper auf den Tragkörper vordefiniert und während des Fügevorganges genau reproduzierbar eingehalten werden.

Ebenso weist ein Verfahren zur Herstellung eines Bodenbearbeitungswerkzeuges, bestehend aus einem Tragkörper und zumindest einem Werkzeugkörper, vorteilhaft folgende Verfahrensschritte auf:
Formgebung des Werkzeugkörpers,
Ein- oder Anbringen eines oder mehrerer Drainageprofile in den Werkzeugkörper, Härten, Vergütung oder Sintern des Werkzeugkörpers,
Anordnung des Werkzeugkörpers auf den Tragkörper,
stoffschlüssiger Fügevorgang zur Verbindung von Tragkörper und Werkzeugkörper.
Bereits während oder nach der Formgebung des Werkzeugkörpers können die Drainageprofile vorteilhaft und ohne große Schwierigkeiten in den bis dahin unbehandelten Werkzeugkörper an- oder eingebracht werden. Erst danach erfolgt eine Nachbehandlung des Werkzeugkörpers durch Härten, Vergütung, Brennen oder Sintern. Der nunmehr fertig gestellte und mit Drainageprofilen versehene Werkzeugkörper wird dann auf dem Tragkörper gezielt platziert und über den stoffschlüssigen Fügevorgang fest und dauerhaft und durch die zuvor eingebrachten Drainageprofile prozesssicher mit dem Tragkörper verbunden.

Insbesondere erfolgt der Fügevorgang zur Verbindung von Werkzeugkörper und Tragkörper als Löt- oder Klebevorgang. Die bislang bekannten Probleme beim Verdampfen von zugegebenem Flussmittel beim Verlöten von Werkzeugkörper und Tragkörper werden durch das nunmehr verbesserte Verfahren effektiv und prozesssicher vermieden. Als Fügemittel zum Löten haben sich insbesondere Silber- oder Kupferlote als geeignet erwiesen. Für die Verwendung von Silberlot sind der Werkzeugkörper und zumindest der entsprechend benachbarte Bereich des Tragkörpers auf eine Löttemperatur unterhalb von 1000 °C, insbesondere auf 600 - 800 °C zu erhitzen. Generell können die angegebenen Temperaturbereiche durch weitere Legierungsbeststandteile der Lote streuen. Bei Verwendung von Kupferlot ist eine Löttemperatur größer 1000 °C anzustreben, idealerweise im Bereich von bis zu 1100 °C anzustreben. In diesem Temperaturbereich bietet sich auch eine Verfahrenstechnische Kombination des Lötvorganges mit einem gleichzeitigen Vergütungsprozess des Tragkörpers an. Der Tragkörpers weist hierzu einen geeigneten, insbesondere kohlenstoffhaltigen Werkstoff auf. Nach dem Lötvorgang wird das aus Tragkörper und darauf verlötetem Werkzeugkörper bestehende Bodenbearbeitungswerkzeug in einem Härtebad abgeschreckt bzw. sehr schnell in der Temperatur abgesenkt. Durch die schnelle Temperaturabsenkung wird im Werkstoff des Tragkörpers eine festigkeitserhöhende Gefügeänderung erzielt, welche die Verschleißfestigkeit des Tragkörpers ebenfalls signifikant erhöht. Zur Erhöhung der Zähigkeit des Tragkörpers und Vermeidung von Sprödbrüchen kann dieser folgend einem Anlassvorgang unterzogen werden.

Bei einem Klebevorgang werden flüssige, meist zähe oder pastöse Klebstoffe verwendet. Diese sind kaum in einer konstanten, gleichmäßig ebenen Schichtdicke aufbringbar. Somit entstehen auch hier während des Zusammenfügens ungewollte Lufteinschlüsse in der Klebstoffmasse, welche vorteilhaft und unschädlich für die Klebeverbindung über die Drainageprofile, bevorzugt auf kürzestem Wege, abgeführt werden. Ebenso können beim Aushärten oder bei einer thermischen Aktvierung des Klebstoffes Ausgasungen auftreten, welche ebenfalls eine ungewollte Blasenbildung innerhalb der Klebstoffschicht und somit eine Schwächung der Klebeverbindung bewirken. Auch diese Gase werden effektiv über die Drainageprofile abgeführt. Bei Verwendung eines Mehrkomponentenklebstoffes kann der Härter des Klebstoffes ebenfalls vorteilhaft durch die Drainageprofile ausgasen.

Weiterhin vorteilhaft erfolgt die Formgebung und Herstellung des Werkzeugkörpers durch folgende Verfahrensschritte aus:
Vorpressen eines Werkzeugkörpers aus einem partikelförmigen und/oder pastösen Werkzeugkörpermaterial, Ein- oder Anbringen eines oder mehrerer Drainageprofile in den Werkzeugkörper sowie Sinter- oder Brennvorgang des Werkzeugkörpers. Bei extrem harten Werkzeugkörpermaterialien wie Sintermetall- oder Keramik-Verbindungen ist es nur mit extremem Aufwand möglich, in den fertiggestellten Werkzeugkörper nachträglich Bohrungen oder Nuten als Drainageprofile einzubringen. Formt man die Drainageprofile vorher in den Rohling des Werkzeugkörpers ein, kann dieser nun fertig geformter Rohling dann problemlos einem Sinter- oder Brennvorgang unter hohen Temperaturen zugeführt werden.

Weiterhin wird die Formgebung und Herstellung des Werkzeugkörpers verbessert und vereinfacht, indem das Ein- oder Anbringen eines oder mehrerer Drainageprofile durch einen Präge- oder Pressvorgang erfolgt. Hier hat es sich als vorteilhaft erwiesen, in eine Negativform zur Formung und/oder zum Vorpressen des Werkzeugkörpers erhabene Profile oder Dome in die Negativform einzuarbeiten. Diese drücken sich dann als Drainageprofile in den Werkzeugkörper ein und/oder durchdringen diesen. Beim nachfolgenden Sinter- oder Brennvorgang verziehen sich die Drainageprofile maßlich kaum, so dass die Werkzeugkörper werkzeugfallend und somit serienmäßig und kostengünstig hergestellt werden können.

Weitere Einzelheiten und Vorteile des Erfindungsgegenstandes ergeben sich aus der nachfolgenden Beschreibung und den zugehörigen Zeichnungen, in denen ein Ausführungsbeispiel mit den dazu notwendigen Einzelheiten und Einzelteilen dargestellt ist. Es zeigen:
Fig.1 ein Bodenbearbeitungswerkzeug in Perspektive,
Fig.2 eine Seitenansicht aus Fig.1 in Schnittdarstellung,
Fig.3 ein Detail aus Fig. 2
Fig.4 eine Perspektive des Werkzeugkörpers,
Fig.5 eine Untenansicht des Werkzeugkörpers,
Fig.6 eine Seitenansicht des Werkzeugkörpers,
Fig.7 ein Detail aus Fig. 6

Bei den Darstellungen handelt es sich im Wesentlichen um konkrete Ausführungsbeispiele. Die Erfindung ist hingegen nicht auf die dargestellten Ausführungsbeispiele beschränkt, sondern kann auch in fachmännischer Weise abgewandelt werden, um sie an einen bestimmten Anwendungsfall anzupassen.

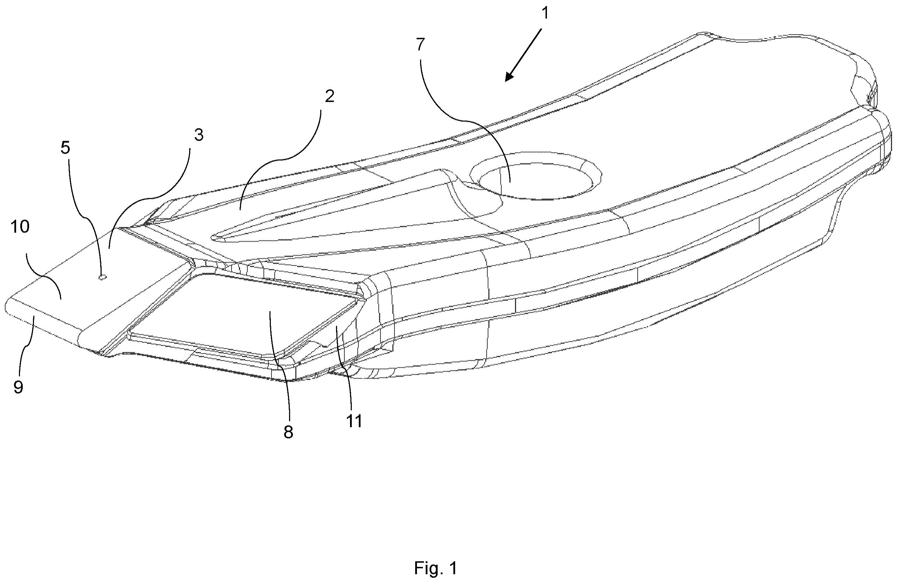

Figur 1 zeigt ein Bodenbearbeitungswerkzeug 1, bestehend aus einem Tragkörper 2 sowie einem Werkzeugkörper 3. Dieser ist nebst weiterer Werkzeugkörper 8 am vorderen Ende des Tragkörpers 2 stoffschlüssig, bevorzugt mittels einer Löt- oder Klebeverbindung, mit diesem verbunden. Beidseitig vom Werkzeugkörper 3 sind weitere Werkzeugkörper 8 angeordnet und ebenfalls stoffschlüssig mit dem Tragkörper verbunden. Etwa in der Mitte des Tragkörpers 2 weist dieser, wie dargestellt, zumindest einen Befestigungsbereich 7 auf. Dieser ist beispielsweise als Senkbohrung ausgebildet oder eingeformt, durch welche der Tragkörper 2 und somit das Bodenbearbeitungswerkzeug 1 mit einem Zinken oder Halter eines Bodenbearbeitungsgerätes verschraubt oder anderweitig befestigt werden kann. Mehrere Bodenbearbeitungswerkzeuge 1 sind seitlich und/oder in Arbeits- oder Vorschubrichtung zueinander versetzt am Bodenbearbeitungsgerät angeordnet. Der Werkzeugkörper 3 weist am vorderen, freistehenden Ende eine Schneide 9 auf, welche sich im oberen Bereich des Werkzeugkörpers 3 in eine Leitfläche 10 fortsetzt. Über diese Leitfläche 10 gleitet das von der Schneide 9 aufgebrochene Bodenmaterial weiter auf die obere Fläche des Tragkörpers 2, welche sich am hinteren Ende des Werkzeugkörpers 3 an diesen anschließt. Der Werkzeugkörper 3 ist von einem kanalförmigen Drainageprofil 5 durchsetzt, welches sich von der Leitfläche 10 bis zur gegenüberliegenden, hier verdeckten Hauptfügefläche 4 des Werkzeugkörpers 3 erstreckt. Der Tragkörper 2 weist eine L-förmige Ausnehmung auf, in welche der Werkzeugkörper 3 eingesetzt und mit seiner Hauptfügefläche 4 sowie seinem rückwärtigen, der Schneide 9 gegenüberliegenden Rückseite 12 mit den Flächen der L-förmigen Ausnehmung des Tragkörpers 2 hartverlötet ist. Weiterhin weist der Tragkörper 2 rechts und links der L-förmigen Ausnehmung weitere in den Tragkörper 2 eingeformte oder ausgenommene Kavitäten 11 auf. In diese sind weitere Werkzeugkörper 8 eingesetzt und ebenfalls hartverlötet. Auch die Werkzeugkörper 8 können analog zum Werkzeugkörper 3, wie zuvor beschrieben, Drainageprofile 5 aufweisen, welche Luft-, Gas- oder Flüssigkeitseinschlüsse eliminieren, indem Luft-, Gas- oder Flüssigkeit durch ein oder mehrere Drainageprofile 5 aus der Lötzone entweichen kann.

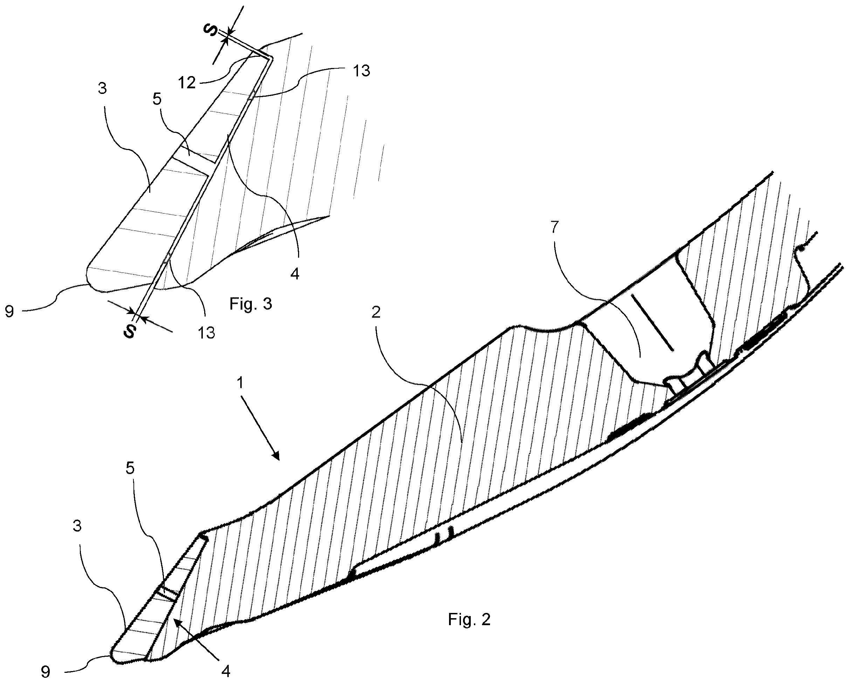

Figur 2 zeigt das Bodenbearbeitungswerkzeug 1 aus Figur 1 in einer seitlichen Schnittdarstellung. Der Tragkörper 2 weist an seinem vorderen Ende eine L-förmige Ausnehmung auf, in welche der Werkzeugkörper 3 eingesetzt und stoffschlüssig verbunden ist. Die der Schneide 9 gegenüberliegende Rückseite 12 des Werkzeugkörpers 3 ist mit dem kurzen Ende und die Hauptfügefläche 4 mit dem langen Ende der L-förmigen Ausnehmung hartverlötet. Dazu werden die zu verlötenden Flächen ggfs. mit Flussmittel benetzt und sowohl der Werkzeugkörper 3 und zumindest der vordere Bereich des Tragkörpers 2 auf eine ausreichend hohe Löttemperatur erhitzt. Das zugegebene Lötmittel schmilzt und dringt mittels Kapillarwirkung in den mit einem Lötspalt oder Fügespalt versehenen Bereich zwischen Werkzeugkörper und Tragkörper ein bzw. breitet sich darin aus. Die durch das Eindringen und/oder sich Ausbreiten des Lötmittels verdrängte Luft, Flüssigkeiten oder Restgase können aus dem Verbindungsbereich entweder zu den Berandungsgrenzen des Werkzeugkörpers 3 oder durch das Drainageprofil 5 in die freie Umgebung abgeführt werden. Analog können in einem Klebeverfahren, beispielsweise bei ungleichmäßig aufgebrachtem Klebstoff, während des Zusammenfügens von Werkzeugkörpern und Tragkörpern sowie der nachfolgenden Kleberaushärtung Luft, Flüssigkeiten, Dämpfe oder Restgase durch das Drainageprofil 5 in die freie Umgebung abgeführt werden.

Figur 3 zeigt den vorderen Bereich des Bodenbearbeitungswerkzeug 1 aus Figur 2 in vergrößerter Darstellung. Der Tragkörper 2 und der Werkzeugkörper 3 sind durch einem Fügespalt mit dem Spaltmaß s voneinander beabstandet. Hierdurch entsteht ein definierter Fügespalt für die Zugabe eines Fügemittels wie Klebstoff oder Lot. Das Spaltmaß s kann durch punkt- oder nockenförmige Erhebungen 13 oder Vorsprünge, welche auf der Hauptfügefläche 4 des Werkzeugkörpers oder gegenüberliegend auf dem Tragkörper 2 angeordnet sind, fehlerfrei vorgegeben und eingehalten werden. Durch Anordnen von drei Erhebungen 13, welche auf der Hauptfügefläche außerhalb des Bereiches der Drainageprofil 5 angeordnet sind, ist die Lage des Werkzeugkörpers 3 zum Tragkörper 2 zudem geometrisch stabil bestimmt. Hierdurch werden weitere Positionierfehler insbesondere zur Einhaltung eines vorgegebenen Spaltmaßes s ausgeschlossen. Auch die Rückseite des Werkzeugkörpers 3 bildet zum Tragkörper hin einen Fügespalt mit dem Spaltmaß s, welches die zuvor beschriebenen Vorteile auch für diesen Bereich ermöglicht. Das Spaltmaß s der jeweiligen Fügebereiche ist bevorzugt kleiner als 1 mm gewählt, weiter bevorzugt nicht mehr als 0,5 mm und idealerweise in einem Bereich von 0,3 bis 0,5 mm gewählt.

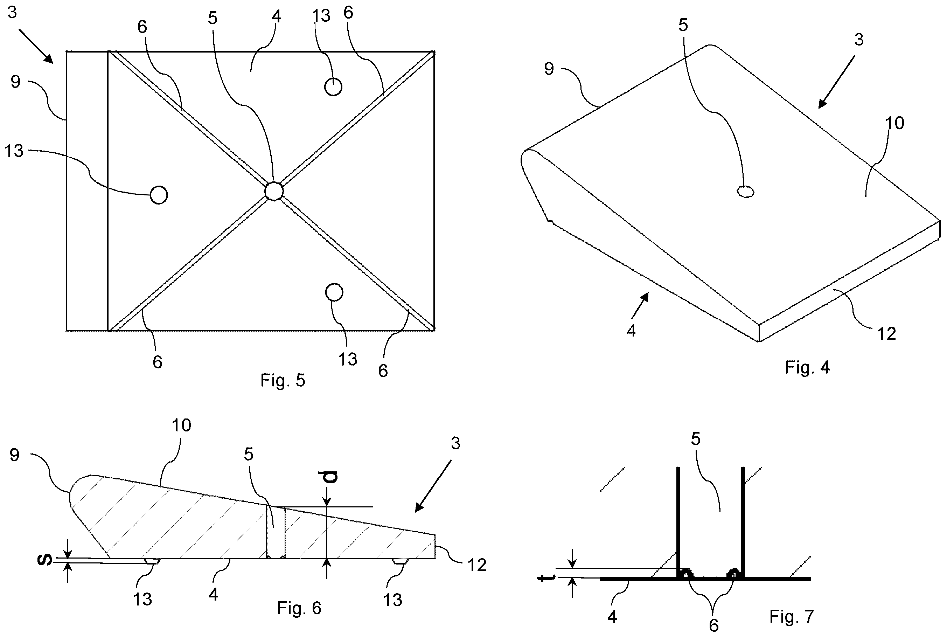

Figur 4 zeigt einen Werkzeugkörper 3 in Perspektive von schräg hinten. An die vordere Schneide 9 schließt sich im oberen Bereich die Leitfläche 10 des Werkzeugkörpers 3 bis zu dessen rückwärtigem Ende an. Die Leitfläche 10 weist ein als Durchbruch oder Ausnehmung ausgebildetes Drainageprofil 5 auf, welches sich bis zur der Leitfläche 10 gegenüber liegenden Hauptfügefläche 4 des Werkzeugkörpers 3 erstreckt. Die Hauptfügefläche 4 bildet zusammen mit der Rückseite 12 des Werkzeugkörpers 3 eine mehrschnittige Schnittstelle zur stoffschlüssigen Verbindung mit der L-förmigen Ausnehmung des Tragkörpers 2.

Figur 5 zeigt die Unterseite des Werkzeugkörpers 3 aus Figur 4 mit Blick auf die Hauptfügefläche 4 und den an diese angrenzenden Bereich der Schneide 9 des Werkzeugkörpers 3. Im mittleren Bereich der Hauptfügefläche 4 ist die zuvor in Figur 4 beschriebene Ausnehmung oder der Durchbruch des Drainageprofils 5 durch den Werkzeugkörper 3 sichtbar. An das Drainageprofil 5 münden weitere, als nuten- oder kanalförmige Drainageprofile 6. Diese erstrecken sich über die Hauptfügefläche 4 hinweg bis zu deren äußeren Berandung, bevorzugt zu deren Ecken. Weiter bevorzugt sind die Drainageprofile 6 ausgehend vom Drainageprofil 5 kreuz- oder sternförmig angeordnet und teilen die Hauptfügefläche 4 in mehrere Teilflächen auf. Innerhalb dieser Teilflächen entstehende Luft-, Flüssigkeits- oder Gaseinschlüsse können erst über die Drainageprofile 6 nach außen oder in Richtung des und über das Drainageprofil 5 abgeführt werden. Die den Fügeprozess störenden Luft-, Flüssigkeits- oder Gaseinschlüsse werden somit auf kürzestem Wege in die Umgebung abgegeben und somit eliminiert. Außerhalb des Bereiches der Drainageprofile 5,6 sind weitere Erhebungen 13 angeordnet. Der Abstand der Erhebungen 3 zu den Drainageprofilen 6 und den jeweils benachbarten Berandungen der Hauptfügefläche sind bevorzugt in etwa gleich.

Figur 6 zeigt einen Querschnitt des Werkzeugkörpers 3 aus Figur 4 und 5 sowie Figur 7 eine vergrößerte Darstellung des Drainageprofils 5, in welches die zuvor beschriebenen Drainageprofile 6 der Hauptfügefläche 4 einmünden. Die Querschnittsausdehnung des Drainageprofils 5 beträgt an ihrer größten Stelle bevorzugt nicht mehr als die Hälfte der mittleren Dicke d des Werkzeugkörpers, idealerweise nicht mehr als ein Drittel der Dicke d des Werkzeugkörpers. Die Drainageprofile 6 sind bevorzugt als trapezförmige, weiter bevorzugt als halbrunde oder halbellipsoide Nuten oder Ausnehmungen ausgebildet und aus der Hauptfügefläche 4 des Werkzeugkörpers 3 ausgenommen oder in diese eingeformt oder eingeprägt.. Die seitliche Querschnittsausdehnung der Drainageprofile 6 beträgt an ihrer größten Stelle, also an der Hautfügefläche 4, bevorzugt ebenfalls nicht mehr als die Hälfte der mittleren Dicke d des Werkzeugkörpers, idealerweise nicht mehr als ein Drittel der Dicke d des Werkzeugkörpers. Die Tiefe t der Drainageprofile 6 beträgt bevorzugt nicht mehr als das Spaltmaß s, welches den Fügespalt definiert, ebenfalls bevorzugt zumindest aber nicht mehr als der zweifache Betrag des Spaltmaßes s. Die mittlere Dicke des Werkzeugkörpers 3 im Bereich des Drainageprofils 5 ist mit dem Maß d dargestellt. Die in Figur 6 sichtbaren, an die Hauptfügefläche 4 des Werkzeugkörpers 3 angeformten Erhebungen 13 haben von der Hauptfügefläche 4 gemessen einen maximalen Abstand s, welcher das Spaltmaß zu der gegenüberliegenden Verbindungsfläche des nicht dargestellten Tragkörpers 2 vorgeben.

### BEZUGSZEICHENLISTE

| | |
|---|---|
| 1 | Bodenbearbeitungswerkzeug |
| 2 | Tragkörper |
| 3 | Werkzeugkörper |
| 4 | Hauptfügefläche |
| 5 | Drainageprofil |
| 6 | Drainageprofil |
| 7 | Befestigungsbereich |
| 8 | Werkzeugkörper |
| 9 | Schneide |
| 10 | Leitfläche |
| 11 | Kavität |
| 12 | Rückseite |
| 13 | Erhebung |

## Patentansprüche

1. Bodenbearbeitungswerkzeug (1), bestehend aus einem Tragkörper (2) und zumindest Werkzeugkörper (3), wobei der Tragkörper (2) und der Werkzeugkörper (3) durch einen Fügevorgang stoffschlüssig miteinander verbunden sind,
**dadurch gekennzeichnet,**
**dass** der Werkzeugkörper (3) ein oder mehrere Drainageprofile (5, 6) zum Entweichen von den Fügevorgang störenden Luft-, Gas- oder Flüssigkeitseinschlüssen aufweist.

2. Bodenbearbeitungswerkzeug (1) nach Anspruch 1,
**dadurch gekennzeichnet,**
**dass** der Werkzeugkörper (3) zumindest eine Hauptfügefläche (4) zur stoffschlüssigen Verbindung zwischen Tragkörper (2) und Werkzeugkörper (3) aufweist, wobei zumindest ein Drainageprofil (5) als von der Hauptfügefläche (4) sich durch den Werkzeugkörper (3) erstreckende Ausnehmung oder Durchbruch ausgebildet ist.

3. Bodenbearbeitungswerkzeug (1) nach Anspruch 1 oder 2,
**dadurch gekennzeichnet,**
**dass** der Werkzeugkörper (3) zumindest eine Hauptfügefläche (4) zur stoffschlüssigen Verbindung zwischen Tragkörper (2) und Werkzeugkörper (3) aufweist, wobei zumindest ein Drainageprofil (6) als sich entlang der Hauptfügefläche (4) erstreckende Ausnehmung oder Nut ausgebildet ist.

4. Bodenbearbeitungswerkzeug (1) nach einem der vorstehenden Ansprüche,
**dadurch gekennzeichnet,**
**dass** die Hauptfügefläche (4) als plane, gebogene, abgewinkelte oder gestufte Fügefläche ausgebildet ist.

5. Bodenbearbeitungswerkzeug (1) nach vorstehenden Ansprüchen,
**dadurch gekennzeichnet,**
**dass** zumindest ein Werkzeugkörper (4) eine höhere Verschleißfestigkeit, Zugfestigkeit und / oder Oberflächenhärte als der Tragkörper (3) aufweisend, insbesondere als Hartmetall- oder Sintermetallkörper, ausgebildet ist.

6. Bodenbearbeitungswerkzeug (1) nach vorstehenden Ansprüchen,
**dadurch gekennzeichnet,**
**dass** der Werkzeugkörper (3) und der Tragkörper (2) zumindest im Bereich der Hauptfügefläche (4) um ein Spaltmaß (s) voneinander beabstandet angeordnet sind.

7. Bodenbearbeitungswerkzeug (1) nach vorstehenden Ansprüchen,
**dadurch gekennzeichnet,.**
**dass** der Werkzeugkörper (3) oder der Tragkörper (2) zumindest im Bereich der Hauptfügefläche (4) partielle, bevorzugt punktförmige Erhebungen (13) oder Vorsprünge aufweist.

8. Bodenbearbeitungswerkzeug (1) nach vorstehenden Ansprüchen,
**dadurch gekennzeichnet,**
**dass** der Tragkörper (2) Formschlusselemente oder Kavitäten zur Aufnahme eines einzelnen oder mehrerer Werkzeugkörper (3) aufweist

9. Verfahren zur Herstellung eines Bodenbearbeitungswerkzeuges (1), bestehend aus einem Tragkörper (2) und zumindest einem Werkzeugkörper (3), **gekennzeichnet**
**durch** die Verfahrensschritte:
Formgebung des Werkzeugkörpers (3),
Ein- oder Anbringen eines oder mehrerer Drainageprofile (5,6) in den Werkzeugkörper (3),
Härten, Vergütung oder Sintern des Werkzeugkörpers (3),
Anordnung des Werkzeugkörpers (3) auf den Tragkörper (2) sowie
stoffschlüssiger Fügevorgang zur Verbindung von Tragkörper (2) und Werkzeugkörper (3).

10. Verfahren zur Herstellung eines Bodenbearbeitungswerkzeuges (1) nach Anspruch 9,
**dadurch gekennzeichnet,**
**dass** der Fügevorgang als Löt- oder Klebevorgang erfolgt.

11. Verfahren zur Herstellung eines Bodenbearbeitungswerkzeuges (1) nach Anspruch 9 oder 10,
**dadurch gekennzeichnet,**
**dass** die Formgebung und Herstellung des Werkzeugkörpers (3) durch folgende Verfahrensschritte erfolgt:
Vorpressen eines Werkzeugkörpers (3) aus einem partikelförmigen und/oder pastösen Werkzeugkörpermaterial,
Ein- oder Anbringen eines oder mehrerer Drainageprofile (5,6) in den Werkzeugkörper (3),
sowie
Sinter- oder Brennvorgang des Werkzeugkörpers (3)

12. Verfahren zur Herstellung eines Bodenbearbeitungswerkzeuges (1) nach Anspruch 11,
**dadurch gekennzeichnet,**
**dass** das Ein- oder Anbringen eines oder mehrerer Drainageprofile (5, 6) durch einen Präge- oder Pressvorgang erfolgt.
